# EUROPEAN PATENT SPECIFICATION

(11) **EP 1 906 474 B1**
(45) Date of publication and mention of the grant of the patent: **27.04.2011**
(21) Application number: 06780816.2
(22) Date of filing: 29.06.2006
(51) Int. Cl.: H01M 4/86, H01M 4/88, H01M 8/04, H01M 8/06, H01M 8/10

(54) **FUEL CELL, METHOD FOR PRODUCING ELECTRODE CATALYST LAYER FOR FUEL CELL, AND METHOD FOR OPERATING FUEL CELL**
BRENNSTOFFZELLE, VERFAHREN ZUR HERSTELLUNG EINER ELEKTRODENKATALYSATORSCHICHT FÜR EINE BRENNSTOFFZELLE UND VERFAHREN ZUM BETRIEB EINER BRENNSTOFFZELLE
PILE À COMBUSTIBLE, PROCÉDÉ DE PRODUCTION D UNE COUCHE CATALYTIQUE D ÉLECTRODE POUR PILE À COMBUSTIBLE, ET PROCÉDÉ DE FONCTIONNEMENT DE LA PILE À COMBUSTIBLE

(30) Priority: 29.06.2005 JP 2005190190
(43) Date of publication of application: 02.04.2008
(73) Proprietor: TOYOTA JIDOSHA KABUSHIKI KAISHA, Toyota-shi, Aichi-ken, 471-8571 (JP)
(72) Inventor: KANEKO, Michiyo c/o Toyota Jidosha Kabushiki, 4718571 (JP)
(74) Representative: Kuhnen & Wacker
(86) International application number: PCT/JP2006/313440
(87) International publication number: WO 2007/001096

(56) References cited:
- WO-A-03/060012
- JP-A- 2003 086 188
- JP-A- 2005 019 232
- JP-A- 2005 056 776
- JP-A- 2005 071 760
- JP-A- 2005 216 701
- JP-A- 2006 099 999
- US-A1- 2004 043 283
- US-A1- 2004 058 808
- US-B1- 6 716 548

## Description

### Technical Field

The present invention relates to a fuel cell having improved durability by suppressing deterioration of the electrolyte membrane or the electrolyte in the electrode catalyst layer. In addition, the present invention relates to a method for producing an electrode catalyst layer for a fuel cell and a method for operating a fuel cell.

### Background Art

Fuel cells which generate electricity through an electrochemical reaction with hydrogen gas have a high power generation efficiency and the gases that are discharged are clean, and thus the impact of such a fuel cell on the environment is extremely low. Accordingly, fuel cells have recently shown promise for a variety of applications, such as in power generation and as a low-emission automobile power source. Fuel cells can be classified according to their electrolyte. For example, known fuel cells include solid polymer fuel cells, phosphoric-acid fuel cells, molten carbonate fuel cells and solid oxide fuel cells.

Solid polymer fuel cells can be operated at a low temperature of about 80°C and have a large power density. Solid polymer fuel cells usually use a proton-conductive polymer membrane for their electrolyte. A fuel electrode and an oxygen electrode, which together form a pair of electrodes, are respectively provided on either side of the polymer membrane which serves as the electrolyte to form an electrode assembly. A single cell in which the electrode assembly is sandwiched by separators serves as a power generation unit. When hydrogen or a hydrogen-containing fuel gas is fed to the fuel electrode and an oxidant gas such as oxygen or air is fed to the oxygen electrode, electricity is generated by an electrochemical reaction between each gas, the electrolyte and each electrode at the triphasic interface. The polymer membrane serving as the electrolyte is conductive to protons when it contains water. To maintain the proton conductivity of the polymer membrane, the fuel gas and the oxidant gas are normally both fed to their respective electrode after having each been moistened by a humidifier.

However, in polymer electrolyte fuel cells, peroxide is formed in the catalyst layer formed at the interface between the solid polymer electrolyte membrane and the electrode by the cell reaction. The formed peroxide turns into peroxide radicals while it diffuses, which causes the electrolyte to deteriorate. For example, in a fuel cell, fuel is oxidized at the fuel electrode and oxygen is reduced at the oxygen electrode. Thus, if hydrogen is used as the fuel and if an acidic electrolyte is employed, the theoretical reaction can be represented by the following formulae (1) and (2).

Anode (hydrogen electrode): H₂ → 2H⁺+ 2e⁻ (1)

Cathode (oxygen electrode): 2H⁺ + 2e⁻ + (1/2)O₂ → H₂O (2)

The hydrogen ions generated at the anode according to the reaction of formula (1) permeate (diffuse) through the solid polymer electrolyte membrane in a H⁺ (XH₂O) hydration state. Hydrogen ions which have permeated through the membrane are fed into the reaction of formula (2) at the cathode. In the electrode reactions occurring at the anode and cathode, the electrode catalyst layer closely adhered to the solid polymer electrolyte membrane acts as the reaction site, so that the reactions progress at the interface between the catalyst in the electrode catalyst layer and the solid polymer electrolyte membrane.

However, in an actual fuel cell, side reactions also occur in addition to these main reactions. A representative example of such a side reaction is the formation of hydrogen peroxide (H₂O₂). While the formation mechanism is not entirely understood, one possible mechanism is as follows. Specifically, it is possible for the formation of hydrogen peroxide to occur at either the hydrogen electrode or the oxygen electrode. For example, at the oxygen electrode, hydrogen peroxide may be formed according to the following formula by the incomplete reduction reaction of oxygen.

O₂ + 2H⁺ + 2e⁻ → 2H₂O₂ (3)

At the hydrogen electrode, oxygen contained in the gas as impurities or which had been deliberately mixed therein, or oxygen which dissolved into the electrolyte at the oxygen electrode and diffused over to the hydrogen electrode, is thought to participate in the reaction. This reaction formula may be the same as the above-described formula (3), or may be represented by the following formula.

2M-H + O²⁻ → 2M + H₂O₂ (4)

Here, M represents the catalyst metal which is used in the hydrogen electrode, and M-H denotes that hydrogen is adhered to the catalyst metal. Generally, a precious metal such as platinum (Pt) is used for the catalyst metal.

The hydrogen peroxide generated on these electrodes moves away from the electrodes by diffusion or the like into the electrolyte. Hydrogen peroxide is a substance having a strong oxidizing power, and thus oxidizes much of the organic matter constituting the electrolyte. While the specific mechanism has not been clarified, it is thought that in many cases the hydrogen peroxide forms radicals, and that the generated hydrogen peroxide radicals become a direct reaction substance in the oxidation reaction. Specifically, it is thought that radicals generated by the following formula either extract hydrogens from the organic matter in the electrolyte or that they break some other linkage. While the cause for the radicals being formed is not entirely clear, it is thought that contact with heavy metal ions has a catalytic effect. It is also thought that the radicals are formed due to heat, light and other such factors.

H₂O₂ → 2 · OH

or

H₂O₂ → · H + · OOH

One of the conventional techniques coping with this problem is disclosed in JP Patent Publication (Kokai) No. 2001-118591 A, in which a compound that "decomposes", "inactivates" or "traps and inactivates" the radicals generated from permeated hydrogen is added into the electrolyte interior to prevent deterioration of the fuel cell from the radicals. Specifically, this document discloses dispersively blending a transition metal oxide such as manganese oxide, ruthenium oxide, cobalt oxide, nickel oxide, chromium oxide, iridium oxide or lead oxide, which decomposes a peroxide on contact, into the solid polymer electrolyte; dispersively and blending a peroxide stabilizer such as a tin compound thereinto, which blocks the formation of peroxide radicals; or blending a compound having a phenolic hydroxy group thereinto, which traps and inactivates generated peroxide radicals.

On the other hand, "Teisei Bunseki Kagaku" (Qualitative Analytical Chemistry), middle volume, page 369, by Seiji Takagi, discloses that Ti(SO₄)₂ has a yellow color in acidic solution and reacts with hydrogen peroxide to produce peroxy titanate, and that this peroxy titanate forms complex anions in the presence of SO₄²⁻.

(WO 03/060012) discloses a PEM fuel cell having a polymer membrane, the polymer containing titanium sulfate. However the titanium sulfate is contained in the form of a functional group (TiO²⁻).

US 6 716 548 discloses polymer electrolyte membrane for fuel cells, the membrane containing titanium sulfate, as a filler.

None of the documents describe a PEM fuel cell having Ti(SO₄)₂ dispersed into an electrode catalyst layer, capable of forming complex with hydrogen peroxide.

### Disclosure of the Invention

However, in the method of adding a compound which "decomposes", "inactivates" or "traps and inactivates" the radicals as disclosed in JP Patent Publication (Kokai) No. 2001-118591 A, peroxide suppression is insufficient. Therefore, there is a need for further technical development in improving the durability of fuel cells.

Accordingly, it is an object of the present invention to provide a fuel cell having improved durability by suppressing deterioration of the electrolyte membrane or the electrolyte in the electrode catalyst layer. It is a further object of the present invention to provide a method for producing an electrode catalyst layer for a fuel cell and a method for operating a fuel cell.

The present inventor discovered that hydrogen peroxide is trapped as a result of premixing a specific compound, thereby arriving at the present invention.

Specifically, a first aspect of the present invention relates to a PEM fuel cell, characterized in that a complex-forming compound capable of forming a complex with hydrogen peroxide is dispersed as an additive into electrode catalyt layer. Hydrogen peroxide generated during operation of the fuel cell is trapped by the complex-forming compound to form a complex. As a result, harmful hydrogen peroxide is removed from the cell.

Considering the production method of the membrane electrode assembly, it is preferable to disperse and add the complex-forming compound into an electrode catalyst layer.

The complex-forming compound used in the present invention is not especially limited so long as the compound is capable of forming a complex with hydrogen peroxide. Specifically, Ti(SO₄)₂ is a preferred example. Ti(SO₄)₂ has a yellow color in acidic solution. This is due to the generation of peroxy titanate according to the following formula (5).

Ti⁴⁺ + 3H₂O + H₂O₂ → H₄TiO₅ + 4H⁺ (5)

It is believed that this peroxy titanate forms complex anions according to formula (6) in the presence of SO₄²⁻. The reverse reaction of this reaction can generally be ignored.

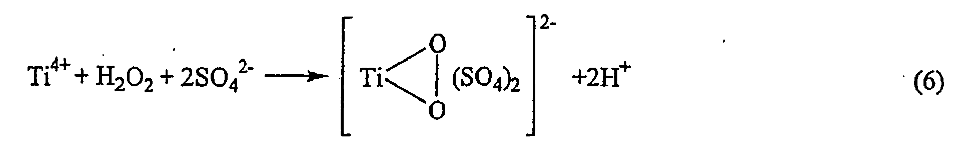

A second aspect of the present invention relates to a method for producing an electrode catalyst layer for a PEM fuel cell, characterized by blending and kneading a complex-forming compound Ti(SO₄)₂ capable of forming a complex with hydrogen peroxide into an ink for an electrode catalyst, forming an electrode catalyst layer from the ink for an electrode catalyst and drying the electrode catalyst layer.

A third aspect of the invention relates to a method for suppressing deterioration of an electrolyte membrane or an electrolyte in an electrode catalyst layer in a PEM fuel cell system formed from a plurality of cells stacked one on another with separators therebetween, the cells comprising a membrane electrode assembly which comprises a fuel electrode fed with hydrogen gas or a hydrogen-containing fuel gas, an oxygen electrode fed with oxygen gas or an oxygen-containing oxidant gas and an electrolyte membrane sandwiched between the fuel electrode and the oxygen electrode, the method characterized by adding and dispersing a complex-forming compound, Ti(SO₄)₂ , capable of forming a complex with hydrogen peroxide into the electrode catalyst layer when producing thereof and/or injecting an aqueous solution of the complex-forming compound, Ti(SO₄)₂ , capable of forming a complex with hydrogen peroxide into the PEM fuel cell system during operation thereof.

According to the present invention, harmful hydrogen peroxide generated during fuel cell operation can be removed from the cell so that deterioration of the electrolyte membrane or the electrolyte in the electrode catalyst layer by hydrogen peroxide can be suppressed, whereby a fuel cell having improved durability can be obtained.

Further, the Ti(SO₄)₂ which is preferably used as the complex-forming compound in the present invention consists of Ti⁴⁺ and SO₄²⁻. Since the Ti⁴⁺ is a metal that is used in the separator and the SO₄²⁻ is the basic material of the electrolyte, the fact that both of these substances are not impurities in the fuel cell is an advantage of the present invention.

### Brief Description of the Drawings

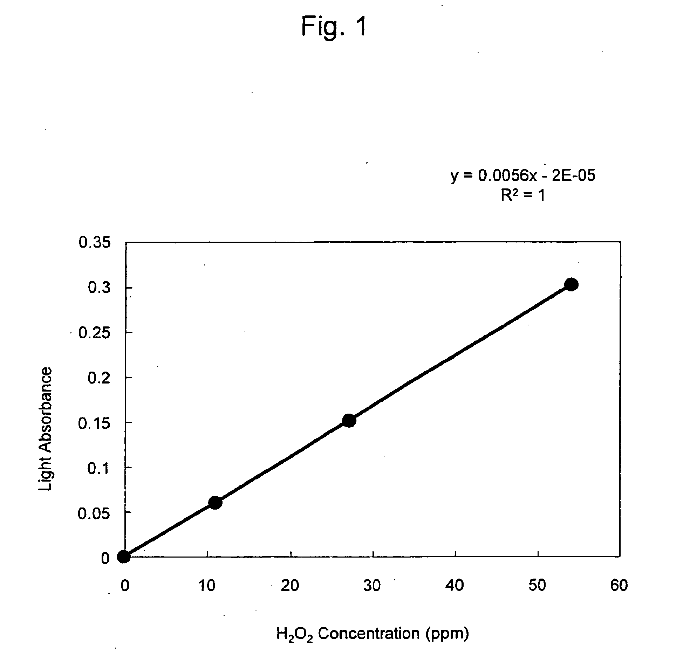

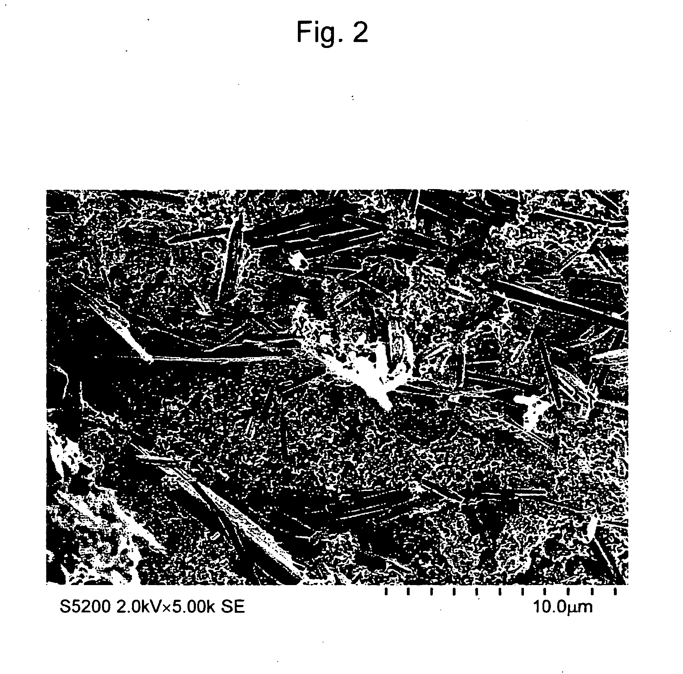

Figure 1 is a graph illustrating the relationship between H₂O₂ concentration and the absorbance thereof when Ti(SO₄)₂ is used as the complex-forming compound. Figure 2 shows an SEM photograph for when Ti(SO₄)₂ has been mixed in the electrolyte.

### Best Mode for Carrying Out the Invention

Figure 1 shows a schematic diagram of the hydrogen oxidation catalyst according to the present invention. Figure 1 shows the state where a hydrophobic group is arranged close to a µ-oxo transition metal complex. Arranging a hydrophobic group having 6 to 10 carbon atoms close to a µ-oxo transition metal complex enables the µ-oxo transition metal complex, which is susceptible to modification by water, to be protected, enables acid and moisture to be efficiently removed from the center of activity during the hydrogen oxidation reaction, and allows the hydrogen oxidizing activity to be further improved.

Figure 2 shows an SEM photograph for when Ti(SO₄)₂ has been mixed in the electrolyte. In Figure 2, the shapes which look like needles are Ti(SO₄)₂.

The present invention will now be described using an example.

A dried fuel cell catalyst layer was immersed in water, whereupon a yellow color reaction was confirmed. The solution was charged with hydrogen peroxide and then further charged with Ti(SO₄)₂ as a complex-forming compound. The hydrogen peroxide in the reaction system was thereby trapped according to the reactions represented by formulae (5) and (6), whereby it was understood that a complex had formed.

Figure 1 is a graph that was empirically determined by the present inventor illustrating the relationship between H₂O₂ concentration and the absorbance thereof when Ti(SO₄)₂ is used as the complex-forming compound. The present invention can be implemented by using the results of Figure 1 as a calibration curve.

From these results, it can be seen that using a complex-forming compound capable of forming a complex with hydrogen peroxide is effective in removing harmful hydrogen peroxide generated during operation of the fuel cell from the cell, which suppresses deterioration of the electrolyte membrane or the electrolyte in the electrode catalyst layer by the hydrogen peroxide, whereby fuel cell durability is improved.

### Industrial Applicability

According to the present invention, fuel cell durability can be improved, which will contribute to the practical use and spread of fuel cells.

## Claims

1. A PEM fuel cell, **characterized in that** a complex-forming compound, Ti(SO₄)₂, capable of forming a complex with hydrogen peroxide is dispersed as an additive into an electrode catalyst layer.

2. A method for producing an electrode catalyst layer for a PEM fuel cell, **characterized by** blending and kneading a complex-forming compound, Ti(SO₄)₂, capable of forming a complex with hydrogen peroxide into an ink for an electrode catalyst, forming an electrode catalyst layer from the ink for an electrode catalyst and drying the electrode catalyst layer.

3. A method for suppressing deterioration of an electrolyte membrane or an electrolyte in an electrode catalyst layer in a PEM fuel cell system formed from a plurality of cells stacked one on another with separators therebetween, the cells comprising a membrane electrode assembly which comprises a fuel electrode fed with hydrogen gas or a hydrogen-containing fuel gas, an oxygen electrode fed with oxygen gas or an oxygen-containing oxidant gas and an electrolyte membrane sandwiched between the fuel electrode and the oxygen electrode, the method **characterized by** adding and dispersing a complex-forming compound, Ti(SO₄)₂, capable of forming a complex with hydrogen peroxide into the electrode catalyst layer when producing thereof and/or injecting an aqueous solution of the complex-forming compound, Ti(SO₄)₂, capable of forming a complex with hydrogen peroxide into the PEM fuel cell system during operation thereof.

## Patentansprüche

1. PEM-Brennstoffzelle, **dadurch gekennzeichnet, dass** eine komplexbildende Verbindung, Ti(SO₄)₂, die in der Lage ist, einen Komplex mit Wasserstoffperoxid zu bilden, als ein Additiv in einer Elektrodenkatalysatorschicht dispergiert wird.

2. Verfahren zum Erzeugen einer Elektrodenkatalysatorschicht für eine PEM-Brennstoffzelle, **dadurch gekennzeichnet, dass** eine komplexbildende Verbindung, Ti(SO₄)₂, die in der Lage ist, einen Komplex mit Wasserstoffperoxid zu bilden, zu einer Tinte für einen Elektrodenkatalysator vermischt und geknetet wird, wobei eine Elektrodenkatalysatorschicht aus der Tinte für einen Elektrodenkatalysator gebildet hergestellt und die Elektrodenkatalysatorschicht getrocknet wird.

3. Verfahren zum Unterdrücken einer Verschlechterung einer Elektrolytmembran oder eines Elektrolyts in einer Elektrodenkatalysatorschicht in einem PEM-Brennstoffzellensystem, das aus einer Mehrzahl von Zellen besteht, die mit dazwischen angeordneten Separatoren aneinandergestapelt sind, wobei die Zellen eine Membranelektrodenanordnung umfassen, die eine Brennstoffelektrode, der Wasserstoffgas oder ein wasserstoffhaltiges Brenngas zugeführt wird, eine Sauerstoffelektrode, der ein Sauerstoffgas oder ein sauerstoffhaltiges Oxidationsgas zugeführt wird, und eine Elektrolytmembran umfasst, die zwischen der Brennstoffelektrode und der Sauerstoffelektrode angeordnet ist, wobei das Verfahren durch Hinzufügen und Dispergieren einer komplexbildenden Verbindung, Ti(SO₄)₂, die in der Lage ist, einen Komplex mit Wasserstoffperoxid zu bilden, in die Elektrodenkatalysatorschicht während der Herstellung desselben und/oder Einspritzen einer wässrigen Lösung der komplexbildenden Verbindung, Ti(SO₄)₂, die in der Lage ist, einen Komplex mit Wasserstoffperoxid zu bilden, in das PEM-Brennstoffzellensystem während des Betriebs desselben **gekennzeichnet** ist.

## Revendications

1. Pile à combustible MEP, **caractérisée en ce qu'**un composé formateur de complexe, Ti(SO₄)₂, capable de former un complexe avec le peroxyde d'hydrogène est dispersé comme additif dans une couche de catalyseur d'électrode.

2. Procédé pour produire une couche de catalyseur d'électrode pour une pile à combustible MEP, **caractérisé par** l'incorporation et le malaxage d'un composé formateur de complexe, Ti(SO₄)₂, capable de former un complexe avec le peroxyde d'hydrogène dans une encre pour un catalyseur d'électrode, la formation d'une couche de catalyseur d'électrode à partir de l'encre pour un catalyseur d'électrode et le séchage de la couche de catalyseur d'électrode.

3. Procédé pour supprimer la détérioration d'une membrane d'électrolyte ou d'un électrolyte dans une couche de catalyseur d'électrode dans un système de pile à combustible MEP formé à partir d'une pluralité de piles empilées les unes sur les autres avec des séparateurs entre elles, les piles comprenant un ensemble d'électrode à membrane qui comprend une électrode à combustible alimentée avec du gaz hydrogène ou un gaz combustible contenant de l'hydrogène, une électrode à oxygène alimentée avec du gaz oxygène ou un gaz oxydant contenant de l'oxygène et une membrane d'électrolyte intercalée entre l'électrode à combustible et l'électrode à oxygène, le procédé **caractérisé par** l'addition et la dispersion d'un composé formateur de complexe, Ti(SO₄)₂, capable de former un complexe avec le peroxyde d'hydrogène dans la couche de catalyseur d'électrode lors de sa production et/ou l'injection d'une solution aqueuse du composé formateur de complexe, Ti(SO₄)₂, capable de former un complexe avec le peroxyde d'hydrogène dans le système de pile à combustible MEP pendant son fonctionnement.
